# EUROPÄISCHE PATENTANMELDUNG

(11) **EP 2 645 525 A2**
(43) Veröffentlichungstag der Anmeldung: **02.10.2013**
(21) Anmeldenummer: 13150203.1
(22) Anmeldetag: 04.01.2013
(51) Int. Cl.: H02J 7/00, G06F 1/26, H01M 10/44

(54) **Schaltungsanordnung**

(30) Priorität: 30.03.2012 DE 102012205244
(71) Anmelder: AAT Alber Antriebstechnik GmbH, 72458 Albstadt (DE)
(72) Erfinder:
(74) Vertreter: Kohler Schmid Möbus

(57) **Zusammenfassung**

Eine Schaltungsanordnung zwischen einer Batterieeinheit (10) mit mindestens zwei parallel geschalteten Batteriezellen oder Zellensträngen (11 bis 18) und einem elektrischen Verbraucher, der eine Steuerelektronik aufweist, wobei die Schaltungsanordnung eine Vorrichtung (20) zur simultanen galvanischen Trennung sowohl der Verbindung zwischen der Batterieeinheit (10) und dem Verbraucher und seiner Steuerelektronik als auch der Batteriezellen oder Zellenstränge (11 bis 18) untereinander aufweist.

## Beschreibung

Die Erfindung betrifft eine Schaltungsanordnung zwischen einer Batterieeinheit mit mindestens zwei parallel geschalteten Batteriezellen oder Zellensträngen und einem elektrischen Verbraucher, der eine Steuerelektronik aufweist.

Bei Batterien, insbesondere bei wiederaufladbaren Lithium-Ionen-Batterien, kommt es bei fehlerhaften Zellen zu chemischen Reaktionen in den Zellen, die unter einer starken Temperaturentwicklung ablaufen. Aufgrund der hohen Temperaturen kann es zu einer Entzündung der Batterieeinheit kommen. Daher ist es beispielsweise zum Transport von Batterien mit hohem Energieinhalt in Flugzeugen aus Sicherheitsgründen notwendig, die einzelnen Batteriezellen galvanisch voneinander zu trennen. Außerdem dürfen die einzelnen Zellen einen bestimmten Energieinhalt nicht überschreiten.

Bei elektrischen Geräten, die mit leistungsstarken Batterien betrieben werden, ist es außerdem meist von Vorteil, die Batterieeinheit vor dem Transport galvanisch abzutrennen, damit sich das Gerät nicht unbeabsichtigt einschalten kann.

Der vorliegenden Erfindung liegt die Aufgabe zugrunde, eine Lösung bereitzustellen, mit der elektrische Verbraucher mit größeren Batterieeinheiten rasch und einfach transportbereit gemacht werden können.

Die Aufgabe wird gelöst mit einer Schaltungsanordnung zwischen einer Batterieeinheit mit mindestens zwei parallel geschalteten Batteriezellen oder Zellensträngen und einem elektrischen Verbraucher, der eine Steuerelektronik aufweist, die dadurch gekennzeichnet ist, dass sie eine Vorrichtung zur simultanen galvanischen Trennung sowohl der Verbindung zwischen der Batterieeinheit und dem Verbraucher und seiner Steuerelektronik als auch der Batteriezellen oder Zellenstränge untereinander aufweist.

Durch Betätigen einer einzigen Vorrichtung können somit die Batteriezellen oder Zellenstränge voneinander getrennt und gleichzeitig der Verbraucher von der Batterieeinheit elektrisch abgekoppelt werden. Auch die spätere Wiederinbetriebnahme des Verbrauchers ist auf ebenso einfache Weise möglich.

Bei einer bevorzugten Ausgestaltung der Schaltungsanordnung kann die Vorrichtung zur galvanischen Trennung einen am Ausgang jeder Batteriezelle oder jedes Zellenstrangs angeordneten Schalter aufweisen, wobei die Schalter gemeinsam und/oder einzeln betätigbar sein können. Die am Ausgang der Zellen oder Zellenstränge angeordneten Schalter sorgen dafür, dass durch ein Öffnen aller Schalter sämtliche Batteriezellen oder Zellenstränge galvanisch voneinander getrennt werden. Auch jeder Stromfluss zum elektrischen Verbraucher wird dadurch sicher unterbunden. Die gemeinsame Betätigung der Schalter kann beispielsweise über eine Leiste erfolgen, wenn die Schalter als Wippenschalter ausgeführt sind. Die Schalter können auch einzeln schaltbar sein. Bei Auftreten eines Defekts in einer Batteriezelle kann diese oder der zugehörige Wellenstrang abgeschaltet und die Batterieeinheit mit den verbleibenden Zellen weiter betrieben werden.

Die Vorrichtung zur galvanischen Trennung kann vorzugsweise manuell betätigbar sein. Dies bietet Vorteile für den Anwender des mit der Batterie betriebenen Verbrauchers. Er muss sich nicht mit entsprechenden Steuerbefehlen zur galvanischen Trennung des Verbrauchers sowie der Batteriezellen oder Zellenstränge untereinander befassen, sondern kann diese Trennung manuell vornehmen.

Weitere Vorteile ergeben sich, wenn jede Batteriezelle oder jeder Zellenstrang einen Energieinhalt von maximal 100 Wh aufweist. Dieser Energieinhalt wird in der Regel als unkritisch betrachtet.

Die Schaltungsanordnung kann vorzugsweise auch Steuereinrichtungen aufweisen, die den Ladezustand der Batterieeinheit überwachen und die Entladung und Ladung der Batterieeinheit steuern. Wird von den Steuereinrichtungen während des Ladens eine Überspannung festgestellt, kann der Ladestrom unterbrochen werden. Auch ein erneutes Freigeben des Ladestroms kann über die Steuereinrichtungen erfolgen. Wird von den Steuereinrichtungen dagegen eine Unterspannung detektiert, so kann die Entladung, d.h. der Stromfluss zum Verbraucher, unterbrochen werden. Ist der Unterspannungszustand behoben, kann der Strom zum Verbraucher wieder freigegeben werden. Außerdem erlauben die Steuereinrichtungen eine Abschaltung aller oder einzelner Batteriezelle oder Zellenstränge bei Überstrom oder Kurzschluss.

Weiter können die Steuereinrichtungen den Zustand der Vorrichtung zur galvanischen Trennung sowie Stromfluss, Spannung und Temperatur der einzelnen Batteriezellen oder Zellenstränge überwachen. Nur wenn die Trennvorrichtung inaktiv ist und ein zulässiger Betriebszustand vorliegt, wird die weitere Elektronik freigeschaltet. Durch die Überwachung des Zustands der einzelnen Batteriezellen oder Zellenstränge können Funktionsstörungen frühzeitig erkannt und die entsprechende Zelle oder der Zallenstrang abgeschaltet werden.

Dabei ist es von besonderem Vorteil, wenn die Steuereinrichtungen über Steuerleitungen mit der Steuerelektronik des Verbrauchers verbunden sind. Der Batteriezustand kann somit an den Verbraucher übermittelt und dort beispielsweise angezeigt werden. Damit kann am Verbraucher direkt insbesondere der Ladezustand der Batterieeinheit und/oder eine Leistungsbegrenzung wegen Übertemperatur in der Batterieeinheit abgelesen werden. Auch vom Verbraucher können Signale an die Schaltungsanordnung übermittelt werden. So können vom Verbraucher aus zum Beispiel weitere Parameter der Batterie abgerufen werden.

Vorzugsweise können die Steuereinrichtungen die Verbindung der Batterieeinheit zum Verbraucher mittels eines Relais freigeben oder unterbrechen. Mit Relais lassen sich auch höhere Ströme sicher schalten.

Aus Sicherheitsgründen ist es weiter vorteilhaft, wenn die Steuereinrichtungen mehrere Steuerbausteine zur mindestens teilweise redundanten Überwachung des Betriebszustandes der Batterieeinheit aufweisen. Dadurch kann sichergestellt werden, dass auch bei Ausfall eines Steuerbausteins keine Zerstörung der Batterieeinheit durch Überspannung auftritt oder der Verbraucher bei einer Unterspannung eingeschaltet werden kann.

Die Schaltungsanordnung ist insbesondere für elektrisch betriebene Kieinfahrzeuge wie Elektro-Fahrräder oder Rollstühle als elektrische Verbraucher mit Vorteil einsetzbar, da diese Fahrzeuge relativ häufig auch in Flugzeugen transportiert werden müssen. Die Schaltungsanordnung kann dabei Teil der Fahrzeugelektronik sein. Sie kann jedoch auch als Bestandteil einer Batterieeinheit eingesetzt werden. An die Batterieeinheit lassen sich dann unterschiedliche Verbraucher anschließen.

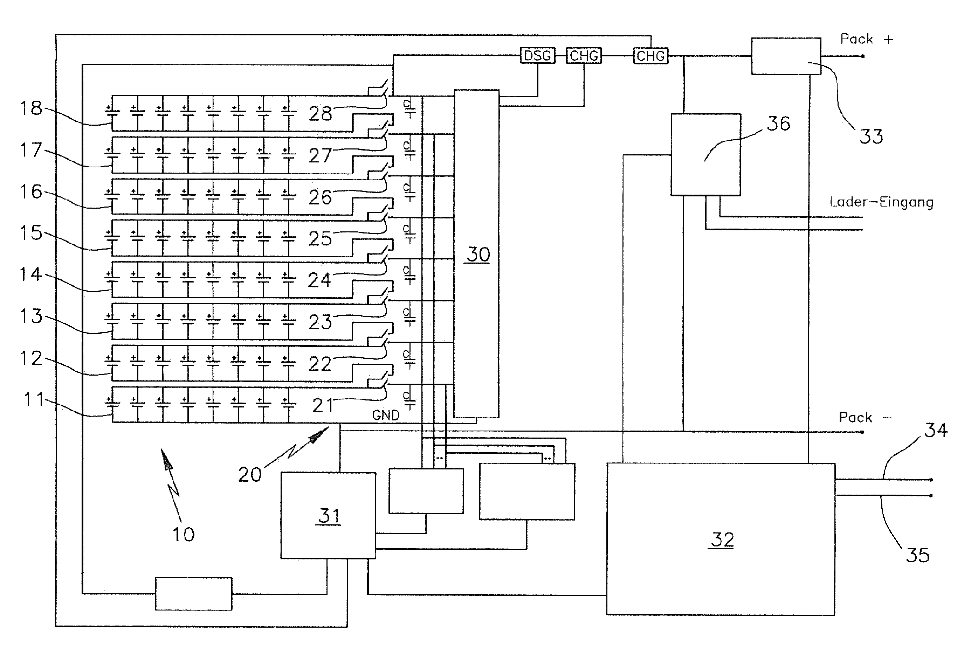

Nachfolgend wird eine bevorzugte Ausgestaltung der Schaltungsanordnung anhand der Zeichnung, die einen Schaltplan der Schaltungsanordnung mit einer Batterieeinheit 10 zeigt, näher erläutert.

Die Batterieeinheit 10 wird von acht aus mehreren in Serie geschalteten Batteriezellen bestehenden Zellensträngen 11 bis 18 gebildet, die parallel geschaltet sind. Jeder Zellenstrang 11 bis 18 weist vorzugsweise einen Energieinhalt von weniger als 100 Wh auf. Weiter ist eine Vorrichtung 20 zur galvanischen Trennung vorgesehen, die acht Schalter 21 bis 28 aufweist, wobei diese Schalter 21 bis 28 jeweils am Ausgang eines Zellenstrangs 11 bis 18 angeordnet sind und als Doppelwippenschalter ausgebildet sein können. Alle Schalter 21 bis 28 können über eine hier nicht dargestellte Leiste gemeinsam von Hand betätigt werden. Sind die Schalter 21 bis 28 geöffnet, sind alle Zellenstränge 11 bis 18 galvanisch voneinander getrennt. Außerdem fließt kein Strom in die Schaltungsanordnung oder einen an den Ausgängen Pack+ und Packangeschlossenen Verbraucher oder dessen Steuerelektronik. Somit ist auch der Verbraucher galvanisch vollständig von der Batterieeinheit 10 entkoppelt.

Die Ausgänge der Schalter 21 bis 28 sind mit einem ersten Steuerbaustein 30 verbunden, der die Batterieeinheit 10 und ihre Zellenstränge 11 bis 18 auf Überspannung und Unterspannung überprüft und ggf. eine Entladung oder Ladung der Batterieeinheit 10 unterbindet, bis die Spannung wieder im Normalbereich liegt. Der Steuerbaustein 30 arbeitet mit einem weiteren Steuerbaustein 31 zusammen, der überwacht, ob alle Schalter 21 bis 28 geschlossen sind. Weiter nimmt der Steuerbaustein 31 unabhängig vom Steuerbaustein 30 eine Überwachung des Ladezustands, der Spannung und der Temperatur der Zellenstränge 11 bis 18 vor. Der Steuerbaustein 31 übermittelt die entsprechenden Statusinformationen der Batterieeinheit 10 an einen dritten Steuerbaustein, der über ein Relais 33 die Spannung an den Ausgängen Pack+ und Pack- für einen Verbraucher freigibt. Der Steuerbaustein 32 kommuniziert außerdem über Steuerleitungen 34, 35 mit der Elektronik des Verbrauchers, wobei in der Figur weder der Verbraucher noch seine Elektronik dargestellt sind. Weiter wird vom Steuerbaustein 32 ein Lader 36 zum Wiederaufladen der Zellenstränge 11 bis 18 kontrolliert.

Die Steuerbausteine 30 bis 32 bilden zusammen die Steuereinrichtungen der Schaltungsanordnung. Eine Aufteilung aller Steuer- und Überwachungsfunktionen auf mehrere Bausteine ist zwar nicht unbedingt erforderlich, doch erlaubt diese Aufteilung eine redundante Überwachung der Batterieeinheit 10 und damit eine höhere Betriebssicherheit.

Sind alle Schalter 11 bis 18 geöffnet, liegen acht galvanisch voneinander getrennte Zellenstränge 11 bis 18 mit vorzugweise jeweils maximal 100 Wh Energieinhalt vor. Die Elektronik ist ebenfalls abgetrennt und arbeitet nicht.

Nach dem Schließen der Schalter liegt ein Akkublock mit insgesamt 800 Wh Energieinhalt vor. Die Elektronik wird mit Spannung versorgt. Der Steuerbaustein 30 und der Steuerbaustein 31 überprüfen den Ladezustand, die Spannung und die Temperatur der Batterieeinheit 10 und leiten diese Informationen an den Steuerbaustein 32 weiter. Dieser löst bei störungsfreiem Betriebszustand der Batterieeinheit 10 das Anziehen des Relais 33 aus und verbindet mit der Elektronik des Verbrauchers. Der Verbraucher kann nun Strom aus der Batterieeinheit ziehen.

## Patentansprüche

1. Schaltungsanordnung zwischen einer Batterieeinheit (10) mit mindestens zwei parallel geschalteten Batteriezellen oder Zellensträngen (11 bis 18) und einem elektrischen Verbraucher, der eine Steuerelektronik aufweist, **dadurch gekennzeichnet, dass** sie eine Vorrichtung (20) zur simultanen galvanischen Trennung sowohl der Verbindung zwischen der Batterieeinheit (10) und dem Verbraucher und seiner Steuerelektronik als auch der Batteriezellen (11 bis 18) oder Zellenstränge untereinander aufweist.

2. Schaltungsanordnung nach Anspruch 1, **dadurch gekennzeichnet, dass** die Vorrichtung (20) zur galvanischen Trennung einen am Ausgang jeder Batteriezelle oder jedes Zellenstrangs (11 bis 18) angeordneten Schalter (21 bis 28) aufweist.

3. Schaltungsanordnung nach Anspruch 2, **dadurch gekennzeichnet, dass** alle Schalter (21 bis 28) gemeinsam und/oder einzeln betätigbar sind.

4. Schaltungsanordnung nach einem der Ansprüche 1 bis 3, **dadurch gekennzeichnet, dass** die Vorrichtung (20) zur galvanischen Trennung manuell betätigbar ist.

5. Schaltungsanordnung nach einem der Ansprüche 1 bis 4, **dadurch gekennzeichnet, dass** jede Batteriezelle oder jeder Zellenstrang (11 bis 18) einen Energieinhalt von maximal 100 Wh aufweist.

6. Schaltungsanordnung nach einem der Ansprüche 1 bis 5, **dadurch gekennzeichnet, dass** sie Steuereinrichtungen (30 bis 32) aufweist, die den Ladezustand der Batterieeinheit (10) überwachen und die Entladung und Ladung der Batterieeinheit (10) steuern.

7. Schaltungsanordnung nach Anspruch 6, **dadurch gekennzeichnet, dass** die Steuereinrichtungen (30 bis 32) den Zustand der Vorrichtung (20) zur galvanischen Trennung sowie Stromfluss, Spannung und Temperatur der einzelnen Batteriezellen oder Zellenstränge (11 bis 18) überwachen.

8. Schaltungsanordnung nach Anspruch 6 oder 7, **dadurch gekennzeichnet, dass** die Steuereinrichtungen (32) über Steuerleitungen (34, 35) mit der Steuerelektronik des Verbrauchers verbunden sind.

9. Schaltungsanordnung nach einem der Ansprüche 6 bis 8, **dadurch gekennzeichnet, dass** die Steuereinrichtungen (30 bis 32) die Verbindung der Batterieeinheit (10) zum Verbraucher mittels eines Relais freigeben oder unterbrechen.

10. Schaltungsanordnung nach einem der Ansprüche 6 bis 9, **dadurch gekennzeichnet, dass** die Steuereinrichtungen mehrere Steuerbausteine (30 bis 32) zur mindestens teilweise redundanten Überwachung des Betriebszustandes der Batterieeinheit (10) aufweisen.
